# EUROPEAN PATENT SPECIFICATION

(11) **EP 1 613 565 B1**
(45) Date of publication and mention of the grant of the patent: **12.11.2008**
(21) Application number: 04716552.7
(22) Date of filing: 03.03.2004
(51) Int. Cl.: C04B 28/00, C04B 24/42, C04B 24/32

(54) **SHRINKAGE REDUCING ADDITIVE FOR CEMENT COMPOSITIONS**
SCHWINDVERMINDERNDER ZUSATZSTOFF FÜR ZEMENTZUSAMMENSETZUNGEN
ADDITIF REDUISANT LE RETRAIT POUR COMPOSITIONS DE CIMENT

(30) Priority: 07.04.2003 GB 0307920
(43) Date of publication of application: 11.01.2006
(73) Proprietor: Construction Research & Technology GmbH, 83308 Trostberg (DE)
(72) Inventor: ZAMPINI, Davide, CH-2552 Orpun (CH)
(74) Representative: Böhm, Thomas
(86) International application number: PCT/EP2004/002099
(87) International publication number: WO 2004/089846

(56) References cited:
- DATABASE WPI Section Ch, Week 199713 Derwent Publications Ltd., London, GB; Class A26, AN 1997-140718 XP002281197 & JP 09 020540 A (SHINETSU CHEM IND CO LTD), 21 January 1997 (1997-01-21)
- ZHUKOV M I ET AL: "Polymer-mineral paste for strengthening ceramic tiles" CHEMICAL ABSTRACTS + INDEXES, AMERICAN CHEMICAL SOCIETY. COLUMBUS, US, vol. 96, no. 6, 8 February 1982 (1982-02-08), page 309 XP000060847 ISSN: 0009-2258

## Description

This invention relates to the prevention of shrinkage in cementitious compositions and to materials for achieving this.

A commonly-encountered problem with cementitious compositions such as concrete and mortar is their tendency to shrink on drying after placement. This can cause some cracking, the presence of which can not only be unsightly but which also can allow the penetration of water into the cementitious composition. This can degrade the concrete by, for example, freezing and thawing in winter conditions, or by allowing water and/or aggressive chemicals to reach steel reinforcing embedded in the concrete, causing corrosion and reducing durability.

The subject has been intensively studied and a large patent literature is evidence of the commonness of the problem and the desirability of solving it.

DATABASE WPI Section Ch, Week 199713 Derwent Publications Ltd., London, GB; Class A26, AN 1997-140718 XP002281197 & JP 09 020540 A disclose a shrinkage reducer for high-fluidity concrete, consisting of a polyoxyalkylene modified organopolysiloxane, and compositions comprising the shrinkage reducer.

It has now been found that a particular class of materials can reduce substantially the drying shrinkage of cementitious compositions. The invention therefore provides a method of reducing the drying shrinkage of a cementitious composition to which water has been added and the composition placed, comprising adding to the composition prior to placement at least one siloxane compound that is at least one of liquid and soluble in at least one of water and aqueous alkali, whereby finely-divided silica is added to the cementitious composition in an amount of up to 20% by weight of the siloxane.

ZHUKOV M I ET AL: 'Polymer-mineral paste for strengthening ceramic tiles' CHEMICAL ABSTRACTS + INDEXES, AMERICAN CHEMICAL SOCIETY. COLUMBUS, US, vol. 96, no. 6, page 309, disclose a composition comprising a mixture of polyethylsiloxane and polyethyl(methyl)hydrosiloxane for adding to a ceramic tile for strengthening it and decreasing a shrinkage deformation.

By "siloxane compound" is meant any siloxane-based material, that is, a material having a linear or branched siloxane backbone chain of the form -SiR^{a}R^{b}-O-SiR^{c}R^{d}-O-. Any such material will work in this invention, provided that it is liquid or at least slightly soluble in at least one of water and aqueous alkali.

Preferred siloxane compounds for use in this invention are selected from those that correspond to the general formula I: 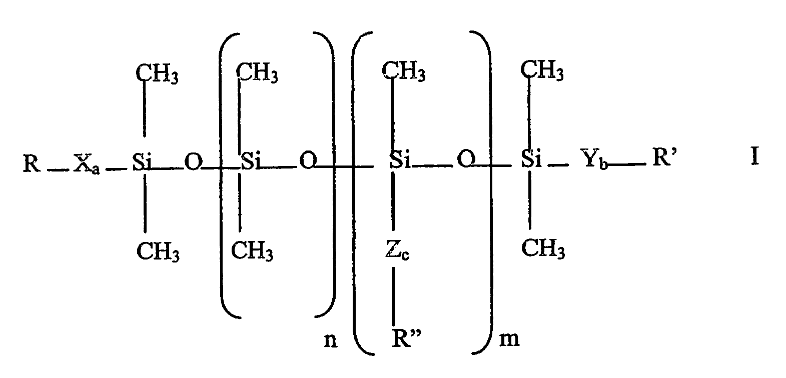 where m and n are independently from 1-2000, preferably from 1-500 and more preferably from 1-200, a, b, and c are independently either 0 or 1 and X, Y and Z are selected from
-O-;
-O-(CH₂)₁₋₃₀-, this moiety being at least one of linear, branched and containing at least one ring;
-(CH₂)₁₋₃₀-, this moiety being at least one of linear, branched and containing at least one ring;
-CH₂-CH₂-CH₂-O-;
-CH₂-CH₂-CH₂-O-CH₂-CHOH-CH₂-;
-CH₂-CH₂-CH₂-O-CH₂-CHOH-CH₂-O-;
-CH₂-CH₂-CH₂-O-CH₂-CHOH-CH₂-N-;
and R, R' and R" are independently selected from at least one of hydrogen, C₁₋₁₀₀ alkyl, C₆₋₃₀ aryl, C₇₋₃₀ aralkyl; C₇₋₃₀ alkaryl; C₁₋₃₀ hydroxyalkyl; C₃₋₂₀₀ polyhydroxyalkyl; polyether consisting of from 2-200 identical or different C₁₋₁₅ oxyalkylene units, with the proviso that, if there is present more than one type of oxyalkylene unit, there shall be present at least two of each unit; C₁₋₃₀ aminoalkyl; polyiminopolyalkylene having from 1-20 identical or different C₂₋₁₅ alkylene units; polyiminopolyoxyalkylene having from 1-20 identical or different C₂₋₁₅ oxyalkylene units; C₃₋₃₀ quaternary ammonium, optionally completely or partially ionised with at least one anion; C₄₋₃₀ betaine; carboxyl, optionally completely or partially ionised with any suitable cation; C₄₋₃₀ polycarboxyalkyl, optionally completely or partially ionised with at least one cation; sulpho group, optionally completely or partially ionised with at least one cation; thiosulpho group, optionally completely or partially ionised with at least one cation; epoxide group; glycidyl; acrylate; C₁₋₃₀ ester; polyester consisting of from 2-200 C₂₋₁₅ diacid and diester monomer units; and esters of inorganic acids, all alkyl chains being at least one of linear, branched and comprising at least one ring.

A more preferred class of siloxane compounds comprises those of Formula I in which a, b, and c are all 1 and X, Y and Z are selected from
-O-(C₂)₁₋₃₀-, this moiety being linear or branched;
-(CH₂)₁₋₃₀-, this moiety being linear or branched;
-CH₂-CH₂-CH₂-O-CH₂-CHOH-CH₂-;
and R, R' and R" are independently selected from at least one of hydrogen; hydroxy; polyether consisting of from 2-200 identical or different C₂₋₆ oxyalkylene units, with the proviso that, if there is present more than one type of oxyalkylene unit, there shall be present at least two of each unit; C₃₋₃₀ quaternary ammonium, optionally completely or partially ionised with at least one anion; C₄₋₃₀ betaine; carboxyl, optionally completely or partially ionised with at least one cation; sulpho group, optionally completely or partially ionised with at least one cation; thiosulpho group, optionally completely or partially ionised with at least one cation; glycidyl; and acrylate; all alkyl chains being at least one of linear, branched and comprising at least one ring.

An even more preferred class of siloxane compounds comprises those of Formula I in which m and n are independently selected from 1-200, a, b, and c are all 1 and X, Y and Z are selected from
-O-(CH₂)₁₋₁₂-;
-(CH₂)₁₋₁₂-;
-CH₂-CH₂-CH₂-O-CH₂-CHOH-CH₂-;
and R, R' and R" are independently selected from at least one of hydrogen; hydroxy; polyether consisting of from 2-200 identical or different C₂₋₆ oxyalkylene units, with the proviso that, if there is present more than one type of oxyalkylene unit, there shall be present at least two of each unit; C₃₋₃₀ quaternary ammonium, optionally completely or partially ionised with at least one anion; C₄₋₃₀ betaine; carboxyl, optionally completely or partially ionised with at least one cation; glycidyl; and acrylate; all alkyl chains being capable of being linear or branched.

An even more preferred class of siloxane compounds comprises those of Formula I in which m is from 1-30 and n is from 1-100, a, b, and c are all 1 and X, Y and Z are selected from
-O-(CH₂)₁₋₆-;
-(CH₂)₁₋₆-;
-CH₂-CH₂-CH₂-O-CH₂-CHOH-CH₂-;
and R, R' and R" are independently selected from at least one of hydrogen; hydroxy; polyether consisting of from 2-200 identical or different C₂₋₆ oxyalkylene units, with the proviso that, if there is present more than one type of oxyalkylene unit, there shall be present at least two of each unit; C₃₋₂₀ quaternary ammonium, optionally completely or partially ionised with at least one anion; C₄₋₁₀ betaine and carboxyl, optionally completely or partially ionised with at least one cation; all alkyl chains being capable of being linear or branched.

The siloxanes hereinabove described may be any such material known to the art. Such materials are well known to the art for a variety of purposes, one of these being as antifoams in various industries. The preferred materials are those where R and R' are methyl or ethyl, n is from 5-200, more preferably from 10-150 and most preferably from 40-100, and m is from 1-100, more preferably from 2-40 and most preferably from 5-10.

The two different types of siloxane units may be arranged randomly or in blocks on the molecule. It is possible to utilise more than one type of moiety R". Examples of R" include ethylene oxide - propylene oxide copolymers of from 10 to 100 units.

The siloxanes that are useful in the present invention may either be incorporated into a dry cementitious composition, or they may be added to such a composition when it is mixed with water immediately prior to placement. The quantity required depends on the type of cement and the precise nature of the siloxane, but a typical range of weight proportions is from 0.05%-20% by weight of the weight of the cement, more preferably from 0.1-5%, even more preferably from 0.1-2% and most preferably from 0.2-1%.

The siloxane is used in conjunction with hydrophobic, finely-divided silica. This can be added to the composition separately from the siloxane, but it is preferred that it be incorporated into the siloxane by, for example, blending or mixing. The quantity of silica can be up to 20% by weight of the siloxane, preferably no more than 10%. In a yet further embodiment of the invention, the siloxane may additionally contain emulsifier. Any suitable emulsifiers may be used in art-recognised quantities. Some commercially-available emulsifiers already contain emulsifier, so addition may be unnecessary.

In addition to the siloxane hereinabove described, there can also be added to the cementitious mix materials known to the art for the performance of particular functions, in art-recognised quantities. Such materials include (but are not limited to) plasticisers and superplasticisers, antifreeze agents, pigments, air-entraining agents, accelerators, retarders and reinforcing fibres of metal, glass or polymer.

Cementitious mixes to which the siloxanes as hereinabove described have been added exhibit superior shrinkage characteristics, leading to better aesthetic appearance, reduced permeability and superior properties with respect to durability. The invention therefore also provides a cementitious composition which includes a siloxane as hereinabove described.

The effect of the presence of the siloxane is further described with reference to the following example.

A polyether siloxane ("Tego" (trade mark) 2008 MR ex Degussa AG is used) is added to a concrete mix of the following composition:

| Portland cement | | 450 parts by weight | |
|---|---|---|---|
| Aggregate | | | |
| | 0-4mm | 770 | " |
| | 4-8mm | 440 | " |
| | 8-16mm | 440 | " |

W/C ratio 0.47

This mix is subjected to the shrinkage test of German Industrial Standard DIN 52 450, along with a mix that does not contain the siloxane.

The results are as follows:

| Age (days) | shrinkage (mm/M) | |
|---|---|---|
| | with siloxane | without siloxane |
| 1 | 0 | 0 |
| 3 | -0.119 | 0.029 |
| 7 | -0.074 | 0.157 |
| 10 | -0.006 | 0.195 |
| 14 | 0.057 | 0.225 |
| 28 | 0.082 | 0.349 |
| 42 | 0.17 | 0.405 |
| 49 | 0.193 | 0.418 |
| 59 | 0.167 | 0.396 |
| 70 | 0.244 | 0.48 |
| 80 | 0.271 | 0.503 |

## Claims

1. A method of reducing the drying shrinkage of a cementitious composition to which water has been added and the composition placed, comprising adding to the composition prior to placement at least one siloxane compound that is at least one of liquid and soluble in at least one of water and aqueous alkali, whereby finely-divided silica is added to the cementitious composition in an amount of up to 20% by weight of the siloxane.

2. A method according to claim 1, in which the siloxane compound selected from those that correspond to the general formula I: 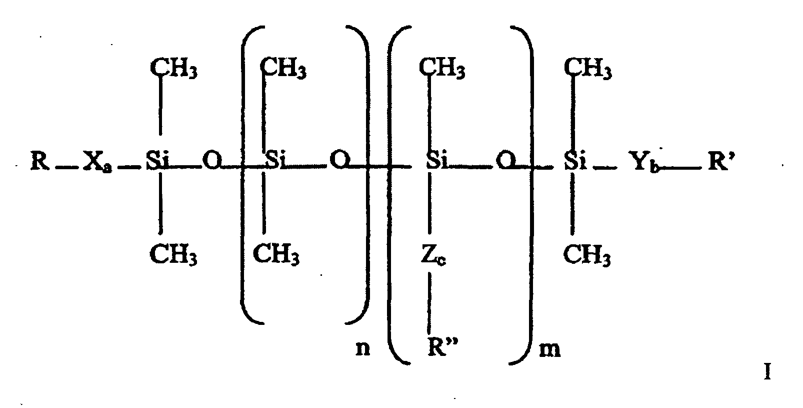 where m and n are independently from 1-2000, preferably from 1-500 and more preferably from 1-200, a, b, and c are independently either 0 or 1 and X, Y and Z are selected from
-O-;
-O-(CH₂)₁₋₃₀-, this moiety being at least one of linear, branched and containing at least one ring;
-(CH₂)₁₋₃₀-, this moiety being at least one of linear, branched and containing at least one ring;
-CH₂-CH₂-CH₂-O-;
-CH₂-CH₂-CH₂-O-CH₂-CHOH-CH₂-;
-CH₂-CH₂-CH₂-O-CH₂-CHOH-CH₂-O-;
-CH₂-CH₂-CH₂-O-CH₂-CHOH-CH₂-N-;
and R, R'and R"are independently selected from at least one of hydrogen, C₁₋₁₀₀ alkyl, C₆₋₃₀ aryl, C₇₋₃₀ aralkyl C₇₋₃₀ alkaryl ; C₁₋₃₀ hydroxyalkyl; C₃₋₂₀₀ polyhydroxyalkyl; polyether consisting of from 2-200 identical or different C₁₋₁₅ oxyalkylene units, with the proviso that, if there is present more than one type of oxyalkylene unit, there shall be present at least two of each unit; C₁₋₃₀ aminoalkyl; polyiminopolyalkylene having from 1-20 identical or different C₂₋₁₅ alkylenc units; polyiminopolyoxyalkylene having from 1-20 identical or different C₂₋₁₅ oxyalkylene units; C₃₋₃₀ quaternary ammonium, optionally completely or partially ionised with at least one anion; C₄₋₃₀ betaine; carboxyl, optionally completely or partially ionised with any suitable cation; C₄₋₃₀ polycarboxyalkyl, optionally completely or partially ionised with at least one cation; sulpho group, optionally completely or partially ionised with at least one cation; thiosulpho group, optionally completely or partially ionised with at least one cation; epoxide group; glycidyl; acrylate; C₁₋₃₀ ester; polyester consisting of from 2-200 C₂₋₁₅ diacid and diester monomer units; and esters of inorganic acids, all alkyl chains being at least one of linear, branched and comprising at least one ring.

3. A method according to claim 2, in which the siloxane compound of formula I is such that a, b, and c are all 1 and X, Y and Z are selected from
-O-(CH₂)₁₋₃₀-, this moiety being linear or branched;
-(CH₂)₁₋₃₀-, this moiety being linear or branched;
-CH₂-CH₂-CH₂-O-CH₂-CHOH-CH₂-;
and R, R' and R" are independently selected from at least one of hydrogen; hydroxy; polyether consisting of from 2-200 identical or different C₂₋₆ oxyalkylene units, with the proviso that, if there is present more than one type of oxyalkylene unit, there shall be present at least two of each unit; C₃₋₃₀ quaternary ammonium, optionally completely or partially ionised with at least one anion; C₄₋₃₀ betaine; carboxyl, optionally completely or partially ionised with at least one cation; sulpho group, optionally completely or partially ionised with at least one cation; thiosulpho group, optionally completely or partially ionised with at least one cation; glycidyl; and acrylate; all alkyl chains being at least one of linear, branched and comprising at least one ring.

4. A method according to claim 2, in which the siloxane compound of Formula I is such that m and n are independently selected from 1-200, a, b, and c are all 1 and X, Y and Z are selected from
-O-(CH₂)₁₋₁₂-;
-(CH₂)₁₋₁₂-;
-CH₂-CH₂-CH₂-O-CH₂-CHOH-CH₂-;
and R, R' and R" are independently selected from at least one of hydrogen; hydroxy; polyether consisting of from 2-200 identical or different C₂₋₆ oxyalkylene units, with the proviso that, if there is present more than one type of oxyalkylene unit, there shall be present at least two of each unit; C₃₋₃₀ quaternary ammonium, optionally completely or partially ionised with at least one anion; C₄₋₃₀ betaine; carboxyl, optionally completely or partially ionised with at least one cation; glycidyl; and acrylate; all alkyl chains being capable of being linear or branched.

5. A method according to claim 2, in which the siloxane compound of Formula I is such that m is from 1-30 and n is from 1-100, a, b, and c are all 1 and X, Y and Z are selected from
-O-(CH₂)1-6-;
-(CH₂)₁₋₆-;
-CH₂-CH₂-CH₂-O-CH₂-CHOH-CH₂-;
and R, R' and R" are independently selected from at least one of hydrogen; hydroxy; polyether consisting of from 2-200 identical or different C₂₋₆ oxyalkylene units, with the proviso that, if there is present more than one type of oxyalkylene unit, there shall be present at least two of each unit; C₃₋₂₀ quaternary ammonium, optionally completely or partially ionised with at least one anion; C₄₋₁₀ betaine and carboxyl, optionally completely or partially ionised with at least one cation; all alkyl chains being capable of being linear or branched.

6. A cementitious composition with reduced drying shrinkage, prepared by a method according to any one of claims 1-5.

## Patentansprüche

1. Verfahren zur Reduktion des Trocknungsschwunds einer zementartigen Zusammensetzung, der Wasser zugesetzt und die eingebracht ist, **dadurch gekennzeichnet, dass** diese Zusammensetzung vor einer Einbringung mit wenigstens einer Siloxanverbindung versetzt wird, die wenigstens eine Flüssigkeit ist und die löslich ist in wenigstens einem von Wasser und wässrigem Alkali, wobei die zementartige Zusammensetzung mit feinteiligem Siliciumdioxid in einer Menge von bis zu 20 Gew-% des Siloxans versetzt wird.

2. Verfahren nach Anspruch 1, worin die Siloxanverbindung ausgewählt ist aus Verbindungen, die der folgenden allgemeinen Formel I entsprechen: 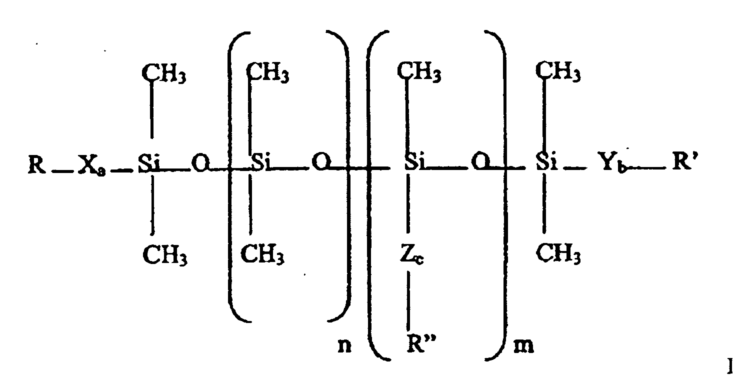 worin m und n individuell für 1 bis 2000, vorzugsweise 1 bis 500 und bevorzugter 1 bis 200 stehen, a, b und c unabhängig für 0 oder 1 stehen und X, Y und Z ausgewählt sind aus
-O-,
-O-(CH₂)₁₋₃₀-, wobei dieser Rest ein linearer, verzweigter und wenigstens einen Ring enthaltender Rest ist,
-(CH₂)₁₋₃₀-, wobei dieser Rest ein linearer, verzweigter und wenigstens einen Ring enthaltender Rest ist,
-CH₂-CH₂-CH₂-O-,
-CH₂-CH₂-CH₂-O-CH₂-CHOH-CH₂-,
-CH₂-CH₂-CH₂-O-CH₂-CHOH-CH₂-O-,
-CH₂-CH₂-CH₂-O-CH₂-CHOH-CH₂-N-,
und R, R' und R" unabhängig ausgewählt sind aus wenigstens einem Wasserstoff, C₁-C₁₀₀-Alkyl, C₆-C₃₀-Aryl, C₇-C₃₀-Aralkyl, C₇-C₃₀-Alkaryl, C₁-C₃₀-Hydroxyalkyl, C₃-C₂₀₀-Polyhydroxyalkyl, einem Polyether, der aus 2 bis 200 identischen oder unterschiedlichen C₁-C₁₅-Oxyalkyleneinheiten besteht, mit der Maßgabe, dass, falls mehr als eine Art einer Oxyalkyleneinheit vorhanden ist, dann wenigstens zwei einer jeden Einheit vorhanden sein sollen, aus C₁-C₃₀-Niederalkyl, Polyiminopolyalkylen mit 1 bis 20 identischen oder unterschiedlichen C₂-C₁₅-Alkyleneinheiten, Polyiminopolyoxyalkylen mit 1 bis 20 identischen oder unterschiedlichen C₂-C₁₅-Oxyalkyleneinheiten, C₃-C₂₀-quarternärem Ammonium, das optional vollständig oder partial ionisiert ist mit wenigstens einem Anion, C₄-C₃₀-Betain, Carboxyl, das optional vollständig oder partial ionisiert ist mit irgend einem geeigneten Kation, C₄-C₃₀-Polycarboxyalkyl, das optional vollständig oder partial ionisiert ist mit wenigstens einem Kation, aus einer Sulfogruppe, die optional vollständig oder partial ionisiert ist mit wenigstens einem Kation, einer Thiosulfogruppe, die optional vollständig oder partial ionisiert ist mit wenigstens einem Kation, einer Epoxidgruppe, einem Glycidyl, einem Acrylat, einem C₁-C₃-Ester oder einem Polyester, der aus 2 bis 200 C₂-C₅-Diacidmonomereinheiten und Diestermonomereinheiten besteht, und aus Estern anorganischer Säuren, wobei alle Alkylketten wenigstens eine lineare oder verzweigte Kette sind und wenigstens einen Ring umfassen.

3. Verfahren nach Anspruch 2, worin die Siloxanverbindung der Formel I so beschaffen ist, dass a, b und c jeweils für 1 stehen und X, Y und Z ausgewählt sind aus
-O-(CH₂)₁₋₃₀-, wobei dieser Rest linear oder verzweigt ist,
-(CH₂)₁₋₃₀-, wobei dieser Rest linear oder verzweigt ist und
-CH₂-CH₂-CH₂-O-CH₂-CHOH-CH₂-,
und R, R' und R" unabhängig ausgewählt sind aus wenigstens einem Wasserstoff, Hydroxypolyether, der aus 2 bis 200 identischen oder verschiedenen C₂-C₆-Oxyalkyleneinheiten besteht, mit der Maßgabe, dass bei Vorhandensein von mehr als einer Art einer Oxyalkyleneinheit dann wenigstens zwei einer jeden Einheit vorhanden sein sollen, C₃-C₃₀ quaternärem Ammonium, das optional vollständig oder partial ionisiert ist mit wenigstens einem Anion, aus C₄-C₃₀-Betain, Carboxyl, das optional vollständig oder partial ionisiert ist mit wenigstens einem Kation, aus einer Sulfogruppe, die optional vollständig oder partial ionisiert ist mit wenigstens einem Kation, aus einer Sulfogruppe, die vollständig oder partial ionisiert ist mit wenigstens einem Kation, einer Thiogruppe, die optional vollständig oder partial ionisiert ist mit wenigstens einem Kation, einem Glycidyl und einem Acrylat, wobei alle Alkylgruppen wenigstens für einen linearen oder verzweigten Rest stehen und wenigstens einen Ring umfassen.

4. Verfahren nach Anspruch 2, worin die Siloxanverbindung der Formel I so beschaffen ist, dass m und n unabhängig ausgewählt sind aus 1 bis 200, a, b und c jeweils für 1 stehen und X, Y und Z ausgewählt sind aus
-O-(CH₂)₁₋₁₂-,
-(CH₂)₁₋₁₂-,
-CH₂-CH₂-CH₂-O-CH₂-CHOH-CH₂-,
und R, R' und R" unabhängig ausgewählt sind aus wenigstens einem Wasserstoff, Hydroxy, Polyether, der 2 bis 200 identische oder unterschiedliche C₂-C₆-Oxyalkyleneinheiten enthält, mit der Maßgabe, dass bei Vorhandensein von mehr als einer Art einer Oxyalkyleneinheit dann wenigstens zwei einer jeden Einheit vorhanden sein sollen, aus C₃-C₃₀ quaternärem Ammonium, das optional vollständig oder partial ionisiert ist mit wenigstens einem Anion, aus C₄-C₃₀-Betain, Carboxyl, das optional vollständig oder partial ionisiert ist mit wenigstens einem Kation, aus Glycidyl und Acrylat, wobei alle Alkylketten linear oder verzweigt sein können.

5. Verfahren nach Anspruch 2, worin die Siloxanverbindung der Formel I so beschaffen ist, dass m für 1 bis 30 steht und n für 1 bis 100 steht, a, b und c jeweils für 1 stehen und X, Y und Z jerweils ausgewählt sind aus
-O-(CH₂)₁₋₆-,
-(CH₂)₁₋₆-,
-CH₂-CH₂-CH₂-O-CH₂-CHOH-CH₂-,
und R, R' und R" unabhängig ausgewählt sind aus wenigstens einem Wasserstoff, Hydroxy, Polyether, der 2 bis 200 identische oder unterschiedliche C₂-C₆-Oxyalkyleneinheiten enthält, mit der Maßgabe, dass bei Vorhandensein von mehr als einer Art einer Oxyalkyleneinheit dann wenigstens zwei einer jeden Einheit vorhanden sein sollen, aus C₃-C₂₀ quaternärem Ammonium, das optional vollständig oder partial ionisiert ist mit wenigstens einem Anion, aus C₄-C₁₀-Betain oder Carboxyl, das optional vollständig oder partial ionisiert ist mit wenigstens einem Kation, wobei alle Alkylketten linear oder verzweigt sein können.

6. Zementartige Zusammensetzung mit einem reduzierten Trocknungsschwund, hergestellt durch ein Verfahren nach einem der Ansprüche 1 bis 5.

## Revendications

1. Procédé de réduction du retrait au séchage d'une composition cimentaire à laquelle de l'eau a été ajoutée et la composition a été mise en place, comprenant l'addition à la composition, avant la mise en place, d'au moins un composé de siloxane qui est au moins liquide ou soluble dans au moins l'eau ou un alcali aqueux, de la silice finement divisée étant ajoutée à la composition cimentaire en quantité allant jusqu'à 20 % en poids du siloxane.

2. Procédé selon la revendication 1, dans lequel le composé de siloxane est choisi parmi ceux qui correspondent à la formule générale I : 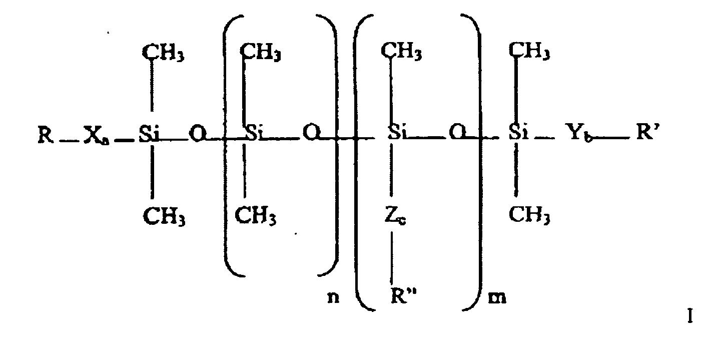 dans laquelle m et n ont indépendamment une valeur de 1-2000, de préférence de 1-500 et mieux de 1-200, a, b et c valent indépendamment 0 ou 1, et X, Y et Z sont choisis parmi
-O-;
-O-(CH₂)₁₋₃₀-, cette fraction étant au moins linéaire, ramifiée, ou contenant au moins un cycle;
-CH₂-CH₂-CH₂-O-;
-CH₂-CH₂-CH₂-O-CH₂-CHOH-CH₂-;
-CH₂-CH₂-CH₂-O-CH₂-CHOH-CH₂-O-;
-CH₂-CH₂-CH₂-O-CH₂-CHOH-CH₂-N-
et R, R' et R" sont choisis indépendamment parmi au moins l'un parmi hydrogène, alkyle en C₁₋₁₀₀, aryle en C₆₋₃₀, aralkyle en C₇₋₃₀, alkaryle en C₇₋₃₀; hydroxyalkyle en C₁₋₃₀; polyhydroxyalkyle en C₃₋₂₀₀; polyéther consistant en 2-200 motifs d'oxyalkylène en C₁₋₁₅ identiques ou différents, avec la condition que, si plus d'un type de motif d'oxyalkylène est présent, il devrait y en avoir au moins deux de chaque motif; aminoalkyle en C₁₋₃₀; polyiminopolyalkylène comptant 1-20 motifs alkylène en C₂₋₁₅ identiques ou différents; polyiminopolyalkylène comptant 1-20 motifs oxyalkylène en C₂₋₁₅ identiques ou différents; ammonium quaternaire en C₃₋₃₀, facultativement ionisé complètement ou en partie avec au moins un anion; bétaïne en C₄₋₃₀; carboxyle, facultativement ionisé complètement ou en partie avec tout cation convenable; polyxcarboxyalkyle en C₄₋₃₀ facultativement ionisé complètement ou en partie avec au moins un cation; groupement sulfo, facultativement ionisé complètement ou en partie avec au moins un cation; groupement thiosulfo, facultativement ionisé complètement ou en partie avec au moins un cation; groupement époxyde, glydidyle, acrylate, ester en C₁₋₃₀; polyester consistant en 2-200 motifs monomères de diester et de diacide en C₂₋₁₅; et esters d'acides inorganiques, toutes les chaînes alkyle étant au moins linéaires, ramifiées ou comprenant au moins un cycle.

3. Procédé selon la revendication 2, dans lequel le composé de siloxane de formule I est tel que a, b et c valent tous 1, et X, Y et Z sont choisis parmi
-O-(CH₂)₁₋₃₀-, cette fraction étant linéaire ou ramifiée;
-(CH₂)₁₋₃₀-, cette fraction étant linéaire ou ramifiée;
-CH₂-CH₂-CH₂-O-CH₂-CHOH-CH₂-;
et R, R' et R" sont choisis indépendamment parmi au moins l'un parmi hydrogène; hydroxy; polyéther consistant en 2-200 motifs d'oxyalkylène en C₂₋₆ identiques ou différents, avec la condition que, si plus d'un type de motif d'oxyalkylène est présent, il devrait y en avoir au moins deux de chaque motif; ammonium quaternaire en C₃₋₃₀, facultativement ionisé complètement ou en partie avec au moins un anion; bétaïne en C₄₋₃₀; carboxyle, facultativement ionisé complètement ou en partie avec au moins un cation; groupement sulfo, facultativement ionisé complètement ou en partie avec au moins un cation; groupement thiosulfo, facultativement ionisé complètement ou en partie avec au moins un cation; glydidyle; et acrylate; toutes les chaînes alkyle étant au moins linéaires, ramifiées ou comprenant au moins un cycle.

4. Procédé selon la revendication 2, dans lequel le composé de siloxane de formule I est tel que m et n sont choisis indépendamment entre 1-200, a, b et c valent tous 1, et X, Y et Z sont choisis parmi
-O-(CH₂)₁₋₁₂-;
-(CH₂)₁₋₁₂-;
-CH₂-CH₂-CH₂-O-CH₂-CHOH-CH₂-;
et R, R' et R" sont choisis indépendamment parmi au moins l'un parmi hydrogène; hydroxy; polyéther consistant en 2-200 motifs d'oxyalkylène en C₂₋₆ identiques ou différents, avec la condition que, si plus d'un type de motif d'oxyalkylène est présent, il devrait y en avoir au moins deux de chaque motif; ammonium quaternaire en C₃₋₃₀, facultativement ionisé complètement ou en partie avec au moins un anion; bétaïne en C₄₋₃₀; carboxyle, facultativement ionisé complètement ou en partie avec au moins un cation; glydidyle; et acrylate; toutes les chaînes alkyle étant au moins linéaires, ramifiées ou comprenant au moins un cycle.

5. Procédé selon la revendication 2, dans lequel le composé de siloxane de formule I est tel que m vaut 1-30, n vaut 1-100, a, b et c valent tous 1, et X, Y et Z sont choisis parmi
-O-(CH₂)₁₋₆-;
-(CH₂)₁₋₆-;
-CH₂-CH₂-CH₂-O-CH₂-CHOH-CH₂-;
et R, R' et R" sont choisis indépendamment parmi au moins l'un parmi hydrogène; hydroxy; polyéther consistant en 2-200 motifs d'oxyalkylène en C₂₋₆ identiques ou différents, avec la condition que, si plus d'un type de motif d'oxyalkylène est présent, il devrait y en avoir au moins deux de chaque motif; ammonium quaternaire en C₃₋₂₀, facultativement ionisé complètement ou en partie avec au moins un anion; bétaïne en C₄₋₁₀ et carboxyle, facultativement ionisé complètement ou en partie avec au moins un cation; toutes les chaînes alkyle pouvant être linéaires ou ramifiées.

6. Composition cimentaire à retrait réduit au séchage, préparé par un procédé selon l'une quelconque des revendications 1-5.
